# EUROPÄISCHE PATENTSCHRIFT

(11) **EP 1 046 109 B1**
(45) Veröffentlichungstag und Bekanntmachung des Hinweises auf die Patenterteilung: **13.04.2005**
(21) Anmeldenummer: 99952327.7
(22) Anmeldetag: 07.08.1999
(51) Int. Cl.: G06F 11/00, G06F 11/267

(54) **VERFAHREN UND VORRICHTUNG ZUR SYNCHRONISATION UND ÜBERPRÜFUNG VON PROZESSOR UND ÜBERWACHUNGSSCHALTUNG**
METHOD AND DEVICE FOR SYNCHRONISING AND TESTING A PROCESSOR AND A MONITORING CIRCUIT
PROCEDE ET DISPOSITIF POUR SYNCHRONISER ET TESTER UN PROCESSEUR ET UN CIRCUIT DE SURVEILLANCE

(30) Priorität: 01.10.1998 DE 19845220
(43) Veröffentlichungstag der Anmeldung: 25.10.2000
(73) Patentinhaber: ROBERT BOSCH GMBH, 70442 Stuttgart (DE)
(72) Erfinder: SCHUMACHER, Hartmut, D-71691 Freiberg (DE); RINGGER, Klaus, D-72622 Nürtingen (DE)
(86) Internationale Anmeldenummer: PCT/DE1999/002470
(87) Internationale Veröffentlichungsnummer: WO 2000/020969

(56) Entgegenhaltungen:
- EP-A- 0 315 054
- EP-A- 0 929 035
- US-A- 5 499 336
- US-A- 5 522 040
- PATENT ABSTRACTS OF JAPAN vol. 013, no. 146 (P-854), 11. April 1989 (1989-04-11) & JP 63 308646 A (FUJITSU LTD), 16. Dezember 1988 (1988-12-16)

## Beschreibung

### Stand der Technik

Die Erfindung betrifft Verfahren und Vorrichtung zur Synchronisation und Überprüfung wenigstens eines Prozessors und wenigstens einer zugeordneten Überwachungsschaltung gemäss den Oberbegriffen der Patentansprüche.

Aus dem Dokument US-A-5,499,336 ist ein Verfahren zur Synchronisation von mehreren vernetzten Recheneinheiten unter Verwendung von Watch-Dog-Signalen bekannt.

Aus der DE 35 39 407 A1 ist ein Rechnersystem mit zwei Prozessoren bekannt, bei dem die Rechnerbelastung im Normalbetrieb auf beide Prozessoren gleichmässig verteilt ist und im Fall einer Störung eines Prozessors der jeweils andere, eine entsprechende Notfunktion übernimmt. Zur Störungsermittlung ist dabei jedem Prozessor genau eine Überwachungsschaltung zugeordnet. Eine Synchronisation der Überwachungsschaltung mit dem Prozessor ist dabei ebenso wie die Zuordnung mehrerer Überwachungsschaltungen zu einem Prozessor nicht vorgesehen.

Solch eine Überwachungsschaltung, auch als Watch-Dog bezeichnet, ist in vielfältiger Weise im Stand der Technik offenbart, wie z.B. auch in der DE 40 23 700 A1. Dabei wird ein in regelmässigen zeitlichen Abständen vom Prozessor ausgesandtes Watch-Dog-Signal in der Überwachungsschaltung empfangen. Liegt die Frequenz der aus den einzelnen Watch-Dog-Signalen entstehenden Signalfolge ausserhalb eines bestimmten gültigen Frequenzfensters, so sendet der Watch-Dog ein Rücksetzsignal an den Prozessor in der Annahme, dass ein Fehler aufgetreten ist. Eine Überprüfung des Watch-Dogs oder dessen Synchronisation mit dem Prozessor ist dabei ebenso wie die Zuordnung mehrerer Überwachungsschaltungen zu einem Prozessor nicht vorgesehen.

Dagegen zeigt die DE 36 38 947 C2 ein Verfahren zur Synchronisation von Rechnern eines Mehrrechnersystems und ein Mehrrechnersystem, insbesondere für Sicherheitseinrichtungen in Kraftfahrzeugen wie z.B. Antiblockiersystem, Gurtstrammer oder Airbags. Das Mehrrechnersystem ist dabei zur schnellen Verarbeitung grosser Datenmengen, durch die Aufteilung derselben auf mehrere Prozessoren vorgesehen. Dabei enthalten die Rechner eigene Zeitmarkengeber und sind durch Daten- und/oder Steuerleitungen untereinander verbunden. Nach dem Einschalten oder Zurücksetzen der Rechner erzeugen diese jeweils ein Startsignal, welches zu den übrigen Rechnern übertragen und von diesen empfangen und ausgewertet wird. Nach Eintreffen des zeitlich letzten Startsignals beginnen die Zeitmarkengeber gleichzeitig mit der Erzeugung von Zeitmarken. Die Rechner erzeugen in Abhängigkeit von den Zeitmarken Synchronsignale, die von den anderen Rechnern empfangen werden. Die empfangenen Synchronsignale werden mit den eigenen Zeitmarken verglichen und bei einer Verschiebung wird die Zeitmarkenfolge des Zeitmarkengebers verändert. Durch den Austausch der Synchronsignale unter den Prozessoren des Mehrrechnersystems ist eine gegenseitige Funktionsüberwachung offenbart, wodurch der Einsatz einer Überwachungsschaltung nicht vorgesehen ist. Die gleichzeitige Verwendung mehrerer Watch-Dogs pro Prozessor und die Synchronisation der Prozessoren mit den zugeordneten Watch-Dogs ist nicht gezeigt.

Bei einem Verzicht auf Mehrrechnersysteme bzw. einer unmittelbaren Verknüpfung einzelner Prozessoren aus Kostengründen oder bei aus Sicherheitsgründen autarken Systemen, wie bei Steuergeräten und Peripherie bei Sicherheitseinrichtungen von Fahrzeugen, insbesondere eines Airbag, muss die Überwachung von einer Überwachungsschaltung durchgeführt werden.

Bei einem Einsatz getrennter Steuergeräte- bzw. Rechnerperipherie werden dabei an einen Prozessor mehrere Schnittstellenbausteine, beispielsweise Anwendungsspezifische Integrierte Schaltkreise die sogenannten ASICs (Applikation-Specific Integrated Circuit) angeschlossen. Besitzen diese standardmässig eine Überwachungsschaltung würde ein nicht Bedienen dieser Schaltung durch den Prozessor Funktionsstörungen nach sich ziehen.

### Vorteile der Erfindung

Dabei hat die Verwendung mehrerer unabhängiger Watch-Dogs je Prozessor bzw. Microcontroller einerseits den Vorteil eines höheren, weil redundanten, Sicherheitsniveaus, andererseits können bei der Ansteuerung von getrennter Rechner- bzw. Steuergeräteperipherie, wie z.B. Front- und Seitenairbag über jeweils einen ASIC, Standandbauteile eingesetzt werden.

Um mehrere unabhängige Watch-Dogs je Microcontroller störungsfrei einsetzen zu können müssen diese synchronisiert werden. Bei Nichtsynchronisation unabhängiger Watch-Dogs können Fälle auftreten, in denen das System bzw. der Microcontroller im HW-Reset hängen bleibt, wenn die Watch-Dogs solcher Art versetzt einen Reset bzw. Impulsreset auslösen, dass immer in der Hochlaufphase, dem Power-On-Reset, des Microcontrollers wenigstens ein Impulsreset von wenigsten einem Watch-Dog kommt. Durch erfindungsgemässes Vorgehen wird sichergestellt, dass dies nicht auftritt. Dabei wird mit einem Synchronisationsschritt in so kurzer Zeit nach dem Power-On-Reset, dass kein Impulsreset eines Watch-Dog seinerseits ein Rücksetzen auslöst, erreicht, dass die Zeitbasen der einzelnen ASICs bzw. Watch-Dogs synchronisiert sind, sprich zum selben Zeitpunkt starten. Darüber hinaus können durch Einsatz einer Synchronisation dann Bauteile mit grösseren bauteilspezifischen Toleranzen, die sich auf die jeweilige Zeitbasis auswirken, eingesetzt werden, was eine Kostenreduktion ermöglicht.

Bei Verwendung eines einfachen Synchronisationssignals bzw. -impulses kann dieser zu einem für den Watch-Dog gültigen Zeitpunkt auftreten, wodurch keine Synchronisation durchgeführt wird. Die bevorzugte Verwendung eines Doppelimpulses, also zweier kurz aufeinander folgender Impulse als das vom Prozessor ausgesandte Synchronisationssignal für die Synchronisation hat dem gegenüber den Vorteil, dass eine fehlerhafte oder keine Synchronisation vermieden wird.

Zumindest einige der oben genannten Vorteile werden erfindungsgemäß durch die in den unabhängigen Ansprüchen 1 und 6 definierten Merkmale erzielt.

### Zeichnung

Die Erfindung wird nachstehend anhand der in der Zeichnung dargestellten Ausführungsformen näher erläutert. Dabei zeigt Figur 1 eine Schaltung mit einem Microcontroller und zwei Peripheriebausteinen mit Watch-Dogs. In Figur 2 ist ein Verfahren zur Synchronisation und Überprüfung des Prozessors und der watch-Dogs in Form eines Flussdiagramms dargestellt. Figur 3 schliesslich zeigt den Verlauf erfindungswesentlicher Signale.

### Beschreibung von Ausführungsbeispielen

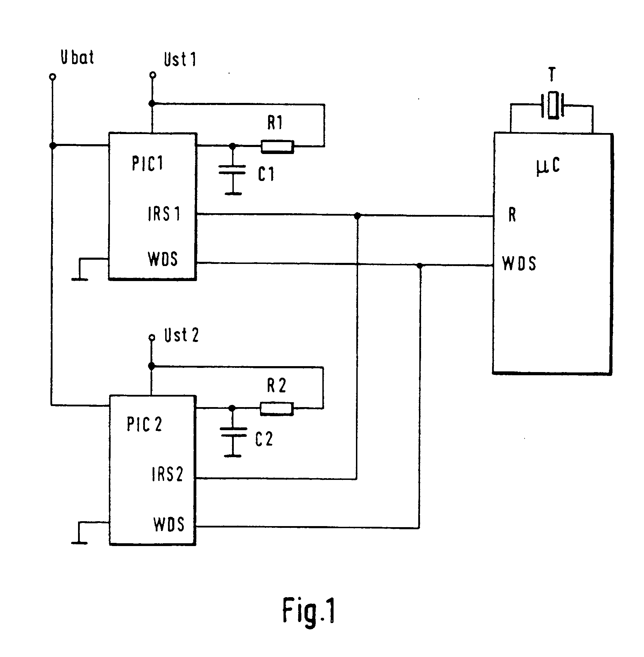

Figur 1 zeigt ein bevorzugtes Ausführungsbeispiel einer Schaltung eines Microcontrollers µC und zweier Peripheriebausteine PIC1 und PIC2, die jeweils wenigstens eine Watch-Dog-Schaltung enthalten. Die beiden Peripheriebausteine PIC1 und PIC2 sind beispielsweise ASICs im Auslösegerät zur Ansteuerung eines Airbags. In diesem Fall kann die gesamte Schaltung aus Figur 1 im Auslösegerät integriert sein. Mit T ist ein Taktgeber für den Microcontroller µC dargestellt. Dies kann beispielsweise ein Schwing-Quarz sein. Beide Peripheriebausteine PIC1 und PIC2 sind über eine Resetleitung mit dem Reseteingang R des Microcontrollers µC verbunden. Diese Resetleitung ist in diesem speziellen Beispiel als high-Leitung ausgelegt. Das bedeutet, dass normalerweise ein hoher Signalpegel am Reseteingang R des Microcontrollers µC anliegt und ein Herunterziehen dieses hohen Pegels auf einen niedrigen Signalpegel, insbesondere auf Masse, einen Reset auslöst. Dies geschieht durch die Signale der Impulsresetausgänge IRS1 und IRS2 der Peripheriebausteine PIC1 und PIC2. Dabei genügt es, wenn der Signalpegel durch ein Impulsresetsignal IRS1 oder IRS2 auf einen niedrigen Pegel, insbesondere Masse, gezogen wird, um die Resetleitung auf den niedrigen Signalpegel zu bringen und einen Reset auszulösen. Analog kann dies mit einer low-Leitung, bei der ein Reset durch ein Signal mit hohem Pegel ausgelöst wird realisiert sein. Des Weiteren sind PIC1, PIC2 und der µC über die Watch-Dog-Signalleitung verbunden. Über diese Leitung sendet der Microcontroller µC ein vorgebbares Watch-Dog-Signal WDS an die beiden Peripheriebausteine PIC1 und PIC2, welches an den zugehörigen Eingängen dort empfangen wird. In diesem Ausführungsbeispiel sind die Signale und deren zugehörige Signalein- bzw. Ausgänge aus Gründen der Übersichtlichkeit mit gleichen Bezeichnungen versehen. Aus Ausgang IRS1 des PIC1 wird somit das Impulsresetsignal IRS1 ausgegeben. Das Watch-Dog-Signal WDS z.B. wird vom µC ausgegeben und gleichermassen von PIC1 und PIC2 empfangen.

Gespeist werden die beiden Peripheriebausteine PIC1 und PIC2 durch die Versorgungsspannung Ubat und jeweils durch die Stabilisierungsspannungen Ust1 und Ust2. Die Zeitbasis des jeweiligen Peripheriebausteins wird durch die dargestellten RC-Glieder R1, C1 und R2, C2 gebildet, die ebenso in die Peripheriebausteine integriert sein können. Der Widerstand R1 ist dabei mit der Klemme für Ust1 und der Widerstand R2 mit Ust2 verbunden. Den Widerständen nachgeschaltet und mit Masse verbunden sind die Kapazitäten C1 bei PIC1 und C2 bei PIC2.

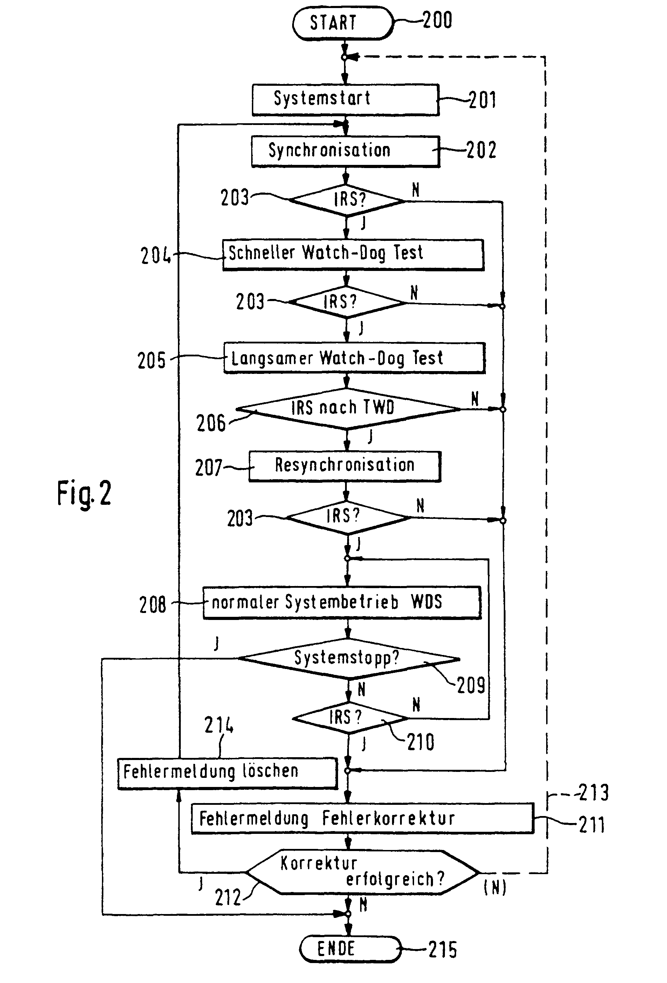

Figur 2 zeigt ein Verfahren zur Synchronisation der Watch-Dogs und des Microcontrollers µC und zur Funktionsprüfung der Watch-Dogs. In Block 200 erfolgt der Start. Beispielsweise in einem Fahrzeug ist dies z.B. das Drehen des Zündschlüssels. Dadurch wird in Block 201 das System hochgefahren, sprich der Rechner bzw. Microcontroller gestartet. In diesem Startvorgang erfolgt ein Power-On-Reset. Erst nach Beendigung der Systemhochlaufzeit liegt auf der Resetleitung und damit am Reseteingang R des Rechners der High-Pegel an. Nach Anliegen des High-Pegels auf der Resetleitung wird eine Synchronisation in Block 202 ausgeführt. Dabei sendet der Microcontroller µC ein Watch-Dog-Signal an die Peripheriebausteine PIC1 und PIC2. Durch die bevorzugte Verwendung eines Watch-Dog-Signals als Doppelimpuls, bestehend aus zwei kurz aufeinander folgenden Impulsen wird sichergestellt, dass eine Synchronisation auch erfolgt, wenn der erste Impuls des WDS zu einem für die Watch-Dogs in PIC1 und/oder PIC2 gültigen Zeitpunkt anliegt und der jeweilige Watch-Dog dadurch keinen Impulsreset senden würde. Denn dann tritt der zweite Impuls in jedem Fall zu einem ungültigen Zeitpunkt auf und das Impulsresetsignal IRS wird ausgelöst. Um dabei zu verhindern, das der zweite Impuls des Doppelimpulses einen Impulsreset auslöst nachdem der erste Impuls bereits einen ausgelöst hat wird der Abstand beider Impulse des Doppelimpulses kleiner als die Dauer des Impulsresetsignals IRS gewählt. Das Impulsresetsignal IRS setzt sich aus den Signalen der Ausgänge IRS1 und IRS2 zusammen, wobei in diesem Ausführungsbeispiel der Low-Pegel entweder von IRS1 und/oder IRS2 vorliegt. In Abfrage 203 wird überprüft ob der provozierte Impulsreset IRS auftritt. Ist dies nicht der Fall wird in Block 211 eine Fehlermeldung ausgegeben und eine Fehlerkorrektur versucht. Wenn der Impulsreset IRS am Reseteingang R wie erwartet ankommt wird in Block 204 ein schneller Watch-Dog Test durchgeführt. Das bedeutet, dass vor dem regulären nächsten Watch-Dog-Signal wiederum vorzugsweise ein Doppelimpuls vom Microcontroller abgegeben wird, um ein Impulsreset-Signal IRS, also einen Impulsreset wenigstens eines Watch-Dogs auszulösen. Dabei muss das Watch-Dog-Signal zum schnellen Watch-Dog Test vor dem regulären zeitlichen Abstand TWD zweier Watch-Dog-Signale bezogen auf das Synchronisations-Watch-Dog-Signal aus Block 202 gesendet werden. Tritt daraufhin ein IRS wie erwartet auf wird in Block 205 ein langsamer Watch-Dog Test durchgeführt. Im anderen Fall gelangt man wieder zu Block 211. Bei dem langsamen Watch-Dog Test in Block 205 werden die Watch-Dog-Signale unterdrückt bis die Watch-Dogs in PICl und PIC2 aufgrund des fehlenden Watch-Dog-Signals einen Impulsreset ausgeben. Durch den langsamen und den schnellen Watch-Dog Test, werden die Obergrenze sowie die Untergrenze des Zeitintervalls TWD, bzw. des zugehörigen Frequenzintervalls überprüft. Wobei durch die vorgebbaren Zeitpunkte der Aussendung der Watch-Dog-Signale ebenfalls vorhandene Toleranzen berücksichtigt werden können.

Da bei dem langsamen Watch-Dog Test zwei Impulsresetsignale IRS im Abstand der Abweichung der beiden Zeitbasen, gebildet aus den jeweiligen RC-Gliedern, der unabhängigen Peripheriebausteine auftreten, müssen die Peripheriebausteine PIC1 und PIC2 bzw. deren Watch-Dogs resynchronisiert werden. Dies geschieht in Block 207. In Abfrage 203 wird dann wieder der Eingang des Impulsresetsignals IRS überprüft. Tritt dieses nicht auf gelangt man wieder zu Block 211. War die Resynchronisation erfolgreich kann in Block 208 der normale Systembetrieb beginnen, ausgedrückt durch das Senden eines regulären Watch-Dog-Signals WDS. In Block 209 wird abgefragt ob der Systembetrieb gestoppt werden soll. Im Normalfall ist dies nicht der Fall und so wird in Abfrage 210 überprüft ob ein Impulsresetsignal IRS auftritt, was im regulären Betrieb auf ein zu schnell oder zu langsam auftretendes Watch-Dog-Signal und somit auf einen Fehler schliessen liesse. Tritt kein Fehler auf, so wird der normale Systembetrieb fortgesetzt. Im Falle eines Fehlers also auftretendem IRS gelangt man wie bei fehlendem IRS in Abfrage 203 und 206 zu Block 211. Dort wird eine Fehlermeldung ausgegeben und eine Fehlerkorrektur versucht. Ob die Korrektur erfolgreich war, wird in Block 212 geprüft. Ist dies der Fall wird mit einer erneuten Synchronisation und Watch-Dog Test ab Block 202 nach löschen der Fehlermeldung in Block 214 begonnen. Im anderen Fall gelangt man zu Block 215 wo das Ende des Systembetriebes und/oder die Fehlermeldung angezeigt wird.

Eine andere Variante zeigt die Möglichkeit nach nicht erfolgreicher Fehlerkorrektur über 213 einen erneuten Systemstart zu generieren um dadurch den Fehler zu beheben.

Eine weitere in Figur 2 nicht aufgezeigte Möglichkeit, wäre das Fortsetzen des Systembetriebs in Form eines reduzierten Notbetriebes um notwendige Funktionen bis zur Reparaturmöglichkeit aufrecht zu erhalten.

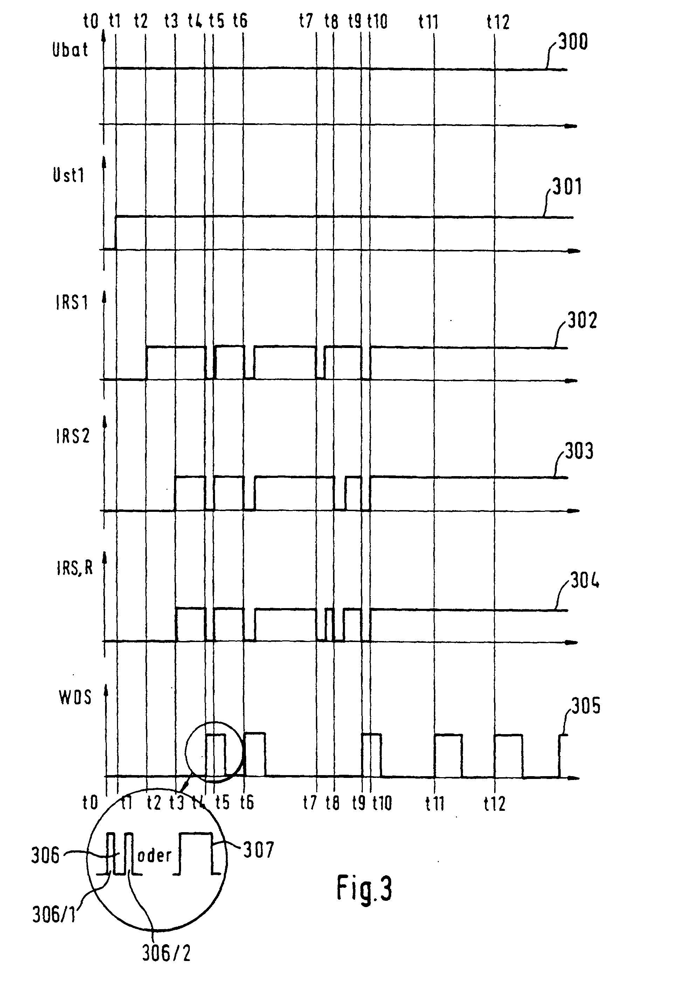

Figur 3 zeigt schematisch die Verläufe erfindungswesentlicher Signale. Dabei ist mit 300 der Signalverlauf der Versorgungsspannung Ubat dargestellt, welcher über den gesamten betrachteten Zeitraum konstant ist. Mit 301 ist der Signalverlauf der Stabilisierungsspannung Ust1 dargestellt. Analog dazu wäre Ust2 darzustellen. Ust1 bzw. Ust2 werden aus jeweils einer eigenen Energiereserve bzw. Spannungsquelle je Peripheriebaustein versorgt, welche von der Versorgungsspannung Ubat im normalen Systembetrieb gespeist und aufgeladen wird. Wenn die Versorgungsspannung ausfällt steht aus der jeweiligen Energiereserve die Spannung Ust1 bzw. Ust2 noch zur Verfügung, um das oder die Sicherheitssysteme des Fahrzeugs auszulösen. Dadurch ist z.B. bei einem Airbagsystem gewährleistet, dass die jeweiligen Gaskissen (Airbags) noch ausgelöst werden können wenn aufgrund eines Unfalls z.B. die Versorgungsspannung einbricht. Bis diese Sonderstromversorgung Ust1 bzw. Ust2 steht vergeht etwas Zeit bis t1. Ab t1 ist diese dann konstant. Dabei kann der Einsetzzeitpunkt (t1 bei Ust1) bei Ust2 geringfügig gegenüber Ust1 variieren.

Mit 302 und 303 sind die Signalverläufe der Impulsresetsignale aus den jeweiligen Impulsresetausgängen IRS1 bzw. IRS 2 der Peripheriebausteine PIC1 und PIC2 dargestellt. Das daraus am Reseteingang R entstandene Impulsresetsignal IRS ist in Signalverlauf 304 dargestellt. Mit Signalverlauf 305 schliesslich ist das durch den Microcontroller µC gelieferte Watch-Dog-Signal als Summe der einzelnen Signale WDS dargestellt. Dabei wird der Zeitraum in welchem der Watch-Dog im fehlerlosen Betrieb des Rechners bzw. Microcontrollers µC die Watch-Dog-Signale WDS erwartet (z.B. t12-t11) mit TWD, also Time-Watch-Dog bezeichnet. Dabei kann je nach Ausführungsform eine gewisse Toleranz bezüglich TWD vorhanden sein, welche dann Berücksichtigung findet.

Der High-Pegel von IRS1 stellt sich bei t2 ein, wohingegen der High-Pegel bei IRS2 und damit der High-Pegel des am Reseteingang R anliegenden gesamten Impulsresetsignals IRS erst bei t3 auftritt. Dieser Verzug t3-t2 liegt darin begründet, dass die Power-On Zeit, die Zeit also, die zum Hochfahren des Systems benötigt wird von der Zeit zwischen zwei regulären Watch-Dog-Signalen TWD z.B. t12-t11 abgeleitet wird. Dies geschieht beispielsweise durch einen Faktor, mit dem die Zeit TWD beaufschlagt wird, um die Power-On Zeit vorzugeben. Durch Toleranzen der Zeit TWD, welche ebenfalls mit dem Faktor beaufschlagt werden, ergibt sich der Zeitverzug t3-t2 der beiden IRS1 und IRS2 bei Systemstart. Wenn nun der Impulsreset, also der Low-Pegel auf der High-Pegel-Leitung des einen Watch-Dogs um den Zeitverzug t3-t2 nach dem Impulsreset des anderen Watch-Dogs kommt und die Zeitbasen beider, abgeleitet aus den jeweiligen RC-Gliedern, ähnlich sind, wird der Systemstart im HW-Reset gehalten. Um dies zu vermeiden wird das erste Watch-Dog-Signal, welches dem Synchronisationsschritt in Block 202 entspricht, sehr schnell (t4) nach dem Power-On-Reset gesendet. Die Zeit t4-t2 ist dabei kürzer als die reguläre Watch-Dog Zeit TWD (z.B. t12-t11) gewählt bzw. vorgegeben, um trotz des Zeitverzuges den synchronisierten Impulsreset IRS bei t4 zu erzeugen (IRS1 und IRS2 und IRS auf Low-Pegel). Die Darstellung in Figur 3 zeigt, dass die Synchronisationssignale (bei t4 und t9) und das Testsignal (t6) entweder als normaler Impuls 307 oder vorzugsweise als Doppelimpuls 306 ausgebildet sein können. Da die genannten Signale (bei t4, t6, t9) einen synchronisierten Impulsreset IRS auslösen sollen, wird durch den zweiten Impuls 306/2 des Doppelimpulses 306 garantiert, dass dieser Impulsreset IRS auch ausgelöst wird wenn der erste Impuls 306/1 des Doppelimpulses 306 zu einem für den oder die Watch-Dogs gültigen Zeitpunkt käme und aufgrund dessen kein IRS ausgelöst würde. Um dabei allerdings zu vermeiden, dass der zweite Impuls 306/2 einen Impulsreset auslöst obwohl bereits durch den ersten Impulse 306/1 ein Impulsreset IRS ausgelöst wurde, ist der Abstand des zweiten 306/2 zum ersten Impuls 306/1 so zu wählen dass der durch den ersten Impulse 306/1 bei z.B. t4 ausgelöste Impulsreset IRS noch andauert wenn der zweite Impuls 306/2 vorliegt. In diesem Beispiel sollte der Impulsabstand des Doppelimpulses 306 kleiner als die Dauer t5-t4 eines Impulsresetsignals IRS gewählt bzw. vorgegeben werden. Im Anschluss an die Synchronisation bei t4 wird bei t6 der schnelle Watch-Dog Test durchgeführt. Dabei wird vor Ablauf der Watch-Dog Zeit TWD unter Berücksichtigung deren möglicher Toleranz wiederum ein Impulsreset IRS (t6) provoziert.

Der Langsame Watch-Dog Test wird durch Unterdrückung bzw. Nichtaussenden von Watch-Dog Signalen WDS durchgeführt. Dadurch läuft für beide Watch-Dogs die Zeit aus in der regulär ein Watch-Dog Signal WDS eintreffen müsste und PIC1 mit IRS1 zum Zeitpunkt t7 sowie PIC2 mit IRS2 zum Zeitpunkt t8 lösen einen Impulsreset IRS am Reseteingang R des Microcontrollers µC aus. Dabei laufen die beiden Peripheriebausteine PIC1 und PIC2 bzw. deren Watch-Dogs aufgrund ihrer im allgemeinen differierenden Zeitbasen um t8-t7 auseinander. Deshalb werden die beiden Peripheriebausteine PIC1 und PIC2 bzw. deren Watch-Dogs in t9 vor Beginn des normalen Systembetriebes nochmals synchronisiert. Bei der Wahl eines Doppelimpulses 306 wird dann das erste reguläre Watch-Dog-Signal WDS nach Ablauf der Watch-Dog Zeit TWD (z.B. t12-t11) nach der Resynchronisation bzw. dem zweiten Impuls 306/2 in t10 gesendet. Durch die schnelle Folge der Impulse 306/1 und 306/2 im Doppelimpuls 306 liegt dieser Zeitraum t10-t9 bzw. t5-t4 aber meist in der Toleranz der Watch-Dog Zeit TWD.

Die Ausführungsbeispiele dargestellt in der Zeichnung mit den Figuren 1-3 sind beliebig erweiterbar auf mehr als einen Microcontroller bzw. Prozessor und auf mehr als zwei diesen jeweils zugeordneten Watch-Dogs.

Die Synchronisation und/oder die Überprüfung (Watch-Dog Test) kann in vorteilhafter Weise auch bei nur einem unabhängigen Watch-Dog und einem oder mehreren Microcontrollern bzw. Prozessoren eingesetzt werden.

Dabei ist unter Synchronisation ganz allgemein das in Übereinstimmung bringen der Startzeitpunkte für den Zeitablauf in der wenigstens einen Überwachungsschaltung und dem wenigstens einen Prozessor bzw. Rechner zu verstehen. Vorteilhafterweise kann dies durch wenigstens ein Synchronisationssignal, insbesondere einen Doppelimpuls, des wenigstens einen Prozessors an die wenigstens eine Überwachungsschaltung erfolgen.

## Patentansprüche

1. Verfahren zum Betreiben wenigstens eines Rechners und wenigstens einer mit dem wenigstens einen Rechner (µC) zugeordneten Überwachungsschaltung (PIC 1, PIC2) insbesondere für Sicherheitseinrichtungen in Fahrzeugen, wobei zwischen dem wenigstens einen Rechner (µC) und der wenigstens einen Überwachungsschaltung (PIC1, PIC2) wenigstens ein von der wenigstens einen Überwachungsschaltung (PIC1, PIC2) erzeugtes Rücksetzsignal (IRS1, IRS2) übersandt wird, **dadurch gekennzeichnet, dass** der wenigstens eine Rechner (µC) und die wenigstens eine Überwachungsschaltung (PIC1, PIC2) mittels eines Signals (WDS) synchronisiert werden, wobei das Signal (WDS) als Impulsfolge wenigstens zweier Einzelimpulse ausgebildet ist und der Abstand der wenigstens zwei Einzelimpulse kürzer ist als die Dauer eines dem Signal (WDS) nachfolgenden Rücksetzsignals (IRS1, IRS2).

2. Verfahren nach Anspruch 1, **dadurch gekennzeichnet, dass**, nachdem der wenigstens eine Rechner und die wenigstens eine Überwachungsschaltung synchronisiert wurden, die Überwachungsschaltung auf ihre Funktion überprüft wird, wobei durch Senden oder Nichtsenden wenigstens eines Prüfsignals durch den wenigstens einen Rechner eine dadurch hervorgerufene Reaktion, insbesondere in Form von wenigstens einem Rücksetzsignal, der wenigstens einen Überwachungsschaltung überprüft wird.

3. Verfahren nach Anspruch 1, **dadurch gekennzeichnet, dass** die Synchronisation durchgeführt wird, bevor ein Rücksetzsignal der Überwachungsschaltung den Rechner erreichen kann.

4. Verfahren nach Anspruch 2, **dadurch gekennzeichnet, dass** das wenigstens eine Prüfsignal ebenfalls als Impulsfolge wenigstens zweier Einzelimpulse ausgebildet ist.

5. Verfahren nach Anspruch 1 oder 4, **dadurch gekennzeichnet, dass** zwischen den wenigstens zwei Einzelimpulsen ein zeitlicher Abstand vorgebbar ist und dass dieser Abstand kürzer vorgegeben wird als ein Zeitabstand zwischen Pegelwechseln in einem durch die Überwachungsschaltung zu überwachenden Signal des Rechners.

6. Vorrichtung mit wenigstens einem Rechner (µC) und wenigstens einer dem wenigstens einen Rechner zugeordneten Überwachungsschaltung (PIC1, PIC2), insbesondere für Sicherheitseinrichtungen in Fahrzeugen, wobei zwischen dem wenigstens einen Rechner (µC) und der wenigstens einen Überwachungsschaltung (PIC1, PIC2) wenigstens ein von der wenigstens einen Überwachungsschaltung (PIC1, PIC2) erzeugtes Rücksetzsignal (IRS1, IRS2) übersandt wird, **dadurch gekennzeichnet, dass** der wenigstens eine Rechner (µC) und die wenigstens eine Überwachungsschaltung (PIC1, PIC2) mittels eines Signals (WDS) synchronisiert werden, wobei Mittel enthalten sind, die das Signal (WDS) als Impulsfolge wenigstens zweier Einzelimpulse ausbilden, wobei der Abstand der wenigstens zwei Einzelimpulse kürzer ist als die Dauer eines dem Signal (WDS) nachfolgenden Rücksetzsignals (IRS1, IRS2).

7. Vorrichtung nach Anspruch 6, **dadurch gekennzeichnet, dass** dem wenigstens einen Rechner wenigstens zwei Überwachungsschaltungen mit jeweils vom Rechner unterschiedlicher Zeitbasis zugeordnet sind.

## Claims

1. Method for operating at least one computer and at least one monitoring circuit (PIC1, PIC2) associated with the at least one computer (µC), particularly for safety devices in vehicles, where at least one reset signal (IRS1, IRS2) produced by the at least monitoring circuit (PIC1, PIC2) is transferred between the at least one computer (µC) and the at least one monitoring circuit (PIC1, PIC2), **characterized in that** the at least one computer (µC) and the at least one monitoring circuit (PIC1, PIC2) are synchronized using a signal (WDS), the signal (WDS) being in the form of a pulse train comprising at least two single pulses, and the interval between the at least two single pulses being shorter than the duration of a reset signal (IRS1, IRS2) which succeeds the signal (WDS).

2. Method according to Claim 1, **characterized in that** synchronization of the at least one computer and the at least one monitoring circuit is followed by a check on the monitoring circuit's operation, where the at least one computer's sending or not sending of at least one test signal checks a resultant reaction, particularly in the form of at least one reset signal, from the at least one monitoring circuit.

3. Method according to Claim 1, **characterized in that** the synchronization is carried out before a reset signal from the monitoring circuit can reach the computer.

4. Method according to Claim 2, **characterized in that** the at least one test signal is likewise in the form of a pulse train comprising at least two single pulses.

5. Method according to Claim 1 or 4, **characterized in that** an interval of time can be prescribed between the at least two single pulses and **in that** this interval is prescribed to be shorter than an interval of time between level changes in a signal from the computer which (signal) is to be monitored by the monitoring circuit.

6. Apparatus having at least one computer (µC) and at least one monitoring circuit (PIC1, PIC2) associated with the at least one computer, particularly for safety devices in vehicles, where at least one reset signal (IRS1, IRS2) produced by the at least one monitoring circuit (PIC1, PIC2) is transferred between the at least one computer (µC) and the at least one monitoring circuit (PIC1, PIC2), **characterized in that** the at least one computer (µC) and the at least one monitoring circuit (PIC1, PIC2) are synchronized using a signal (WDS), where means are contained which produce the signal (WDS) in the form of a pulse train comprising at least two single pulses, the interval between the at least two single pulses being shorter than the duration of a reset signal (IRS1, IRS2) which succeeds the signal (WDS).

7. Apparatus according to Claim 6, **characterized in that** the at least one computer has at least two associated monitoring circuits with a respective time base which differs from that of the computer.

## Revendications

1. Procédé d'exploitation d'au moins une unité centrale de traitement et d'au moins un circuit de surveillance (PIC1, PIC2) associé à la, au moins une, unité centrale de traitement (µC), en particulier pour des dispositifs de sécurité dans les véhicules, dans lequel, entre l'au moins une unité centrale de traitement (µC) et l'au moins un circuit de surveillance (PIC 1, PIC2), au moins un signal de retour (IRS1, IRS2) généré par l'au moins un circuit de surveillance (PIC1, PIC2) est transmis,
**caractérisé en ce que**
la, au moins une, unité centrale de traitement (µC) et le, au moins un, circuit de surveillance (PIC1, PIC2) peuvent être synchronisés au moyen d'un signal (WDS), le signal (WDS) étant configuré comme une suite d'impulsions d'au moins deux impulsions individuelles et l'intervalle entre les, au moins deux, impulsions individuelles étant inférieur à la durée d'un signal de retour (IRS1, IRS2) émis après le signal (WDS).

2. Procédé selon la revendication 1,
**caractérisé en ce que**,
une fois que la, au moins une, unité centrale de traitement et le, au moins un, circuit de surveillance ont été synchronisés, le fonctionnement du circuit de surveillance est testé, l'émission ou la non-émission d'au moins un signal de contrôle par la, au moins une, unité centrale de traitement, testant la réaction générée par le, au moins un, circuit de surveillance, en particulier sous la forme d'au moins un signal de retour.

3. Procédé selon la revendication 1,
**caractérisé en ce que**
la synchronisation est réalisée avant que le signal de retour du circuit de surveillance puisse atteindre l'unité centrale de traitement.

4. Procédé selon la revendication 2,
**caractérisé en ce que**
le, au moins un, signal de contrôle est également configuré comme une suite d'impulsions d'au moins deux impulsions individuelles.

5. Procédé selon la revendication 1 ou 4,
**caractérisé en ce que**,
entre les, au moins deux, impulsions individuelles, un intervalle de temps est prédéterminable, et cet intervalle est prédéterminé inférieur à un intervalle de temps entre les changements de niveaux dans un signal de l'unité centrale de traitement devant être surveillé par le circuit de surveillance.

6. Dispositif comprenant au moins une unité centrale de traitement (µC) et au moins un circuit de surveillance (PIC1, PIC2) associé à l'au moins une, unité centrale de traitement, en particulier pour des dispositifs de sécurité dans les véhicules, dans lequel, entre la, au moins une, unité centrale de traitement (µC) et le, au moins un, circuit de surveillance (PIC1, PIC2), au moins un signal de retour (IRS1, IRS2) généré par le, au moins, un circuit de surveillance (PIC1, PIC2) est transmis,
**caractérisé en ce que**
la, au moins une, unité centrale de traitement (µC) et le, au moins un, circuit de surveillance (PIC1, PIC2) peuvent être synchronisés au moyen d'un signal (WDS), avec des moyens prévus pour configurer le signal (WDS) comme une suite d'impulsions d'au moins deux impulsions individuelles, l'intervalle entre les, au moins deux, impulsions individuelles étant inférieur à la durée d'un signal de retour (IRS1, IRS2) émis après le signal (WDS).

7. Dispositif selon la revendication 6,
**caractérisé en ce que**
au moins deux circuits de surveillance avec respectivement une base de temps différente de l'unité centrale de traitement sont associés à, l'au moins une unité centrale de traitement.
